# EUROPÄISCHE PATENTSCHRIFT

(11) **EP 3 475 144 B1**
(45) Veröffentlichungstag und Bekanntmachung des Hinweises auf die Patenterteilung: **22.07.2020**
(21) Anmeldenummer: 17761050.8
(22) Anmeldetag: 22.08.2017
(51) Int. Cl.: G01C 11/00, G01S 13/89, G01S 17/89, B61L 25/02, B61L 3/00, B61L 15/00

(54) **KONZEPT ZUM ERSTELLEN EINER DIGITALEN KARTE**
CONCEPT FOR CREATING A DIGITAL MAP
CONCEPT POUR ÉTABLIR UNE CARTE NUMÉRIQUE

(30) Priorität: 02.09.2016 DE 102016216618
(43) Veröffentlichungstag der Anmeldung: 01.05.2019
(73) Patentinhaber: Siemens Mobility GmbH, 81739 München (DE)
(72) Erfinder: BAHLMANN, Claus, 10707 Berlin (DE); KLIER, Christian, 14469 Potsdam (DE); NOURANI-VATANI, Navid, 10117 Berlin (DE)
(86) Internationale Anmeldenummer: PCT/EP2017/071143
(87) Internationale Veröffentlichungsnummer: WO 2018/041672

(56) Entgegenhaltungen:
- DE-A1- 19 529 986
- DE-A1-102010 033 372
- US-A1- 2009 177 401
- WENHUAN SHI ET AL: "Automatic generation of road network map from massive GPS, vehicle trajectories", INTELLIGENT TRANSPORTATION SYSTEMS, 2009. ITSC '09. 12TH INTERNATIONAL IEEE CONFERENCE ON, IEEE, PISCATAWAY, NJ, USA, 4. Oktober 2009 (2009-10-04), Seiten 1-6, XP031560135, ISBN: 978-1-4244-5519-5

## Beschreibung

Die Erfindung betrifft ein Verfahren sowie eine Vorrichtung zum Erstellen einer digitalen Karte. Die Erfindung betrifft des Weiteren ein Schienenfahrzeug sowie ein Computerprogramm.

Im Schienenverkehr ist es vorteilhaft, die Positionen der Schienenfahrzeuge zu kennen. Bekannte Lokalisierungskonzepte basieren beispielsweise auf GPS-Sensoren oder Odometrie, um die Schienenfahrzeuge zu lokalisieren.

Die Offenlegungsschrift DE 101 04 946 A1 zeigt ein Verfahren und eine Vorrichtung zur Bestimmung der aktuellen Position und zur Überwachung des geplanten Weges eines Objektes, beispielsweise eines Schienenfahrzeugs.

Die Offenlegungsschrift DE 10 2010 033 372 A1 zeigt ein Verfahren und ein System zum Ermitteln der Position eines Schienenfahrzeugs. Das Ermitteln der Position des Schienenfahrzeugs kann durch eine SLAM-Prozessierungseinheit erfolgen.

Die Offenlegungsschrift DE 10 2012 215 533 A1 zeigt eine Positionsbestimmung eines Schienenfahrzeugs.

Die Offenlegungsschrift DE 10 2007 009 772 A1 zeigt eine Vorrichtung und ein Verfahren zur Ermittlung einer gleisselektiven Ortungsinformation.

Die der Erfindung zugrunde liegende Aufgabe ist darin zu sehen, ein effizientes Konzept zum Erstellen einer digitalen Karte bereitzustellen.

Diese Aufgabe wird mittels des jeweiligen Gegenstands der unabhängigen Ansprüche gelöst. Vorteilhafte Ausgestaltungen der

Erfindung sind Gegenstand von jeweils abhängigen Unteransprüchen.

Es wird ein Verfahren zum Erstellen einer digitalen Karte unter Verwendung eines eine Umfelderfassungseinrichtung aufweisenden Schienenfahrzeugs bereitgestellt, wobei während eines Abfahrens eines Gleises mittels des Schienenfahrzeugs ein Umfeld des Schienenfahrzeugs mittels der Umfelderfassungseinrichtung erfasst wird, wobei eine digitale Karte des Umfelds basierend auf dem erfassten Umfeld erstellt wird.

Es wird eine Vorrichtung zum Erstellen einer digitalen Karte bereitgestellt, umfassend eine Umfelderfassungseinrichtung, die ausgebildet ist, während eines Abfahrens eines Gleises mittels eines Schienenfahrzeugs ein Umfeld des Schienenfahrzeugs zu erfassen, und einen Prozessor, der ausgebildet ist, eine digitale Karte des Umfelds basierend auf dem erfassten Umfeld zu erstellen.

Es wird ein Schienenfahrzeug bereitgestellt, umfassend die Vorrichtung zum Erstellen einer digitalen Karte.

Es wird ein Computerprogramm bereitgestellt, welches einen Programmcode zur Durchführung des Verfahrens zum Erstellen einer digitalen Karte, wenn das Computerprogramm auf einem Computer ausgeführt wird.

Die Erfindung basiert auf der Erkenntnis, dass die obige Aufgabe dadurch gelöst werden kann, wenn die digitale Karte basierend auf dem erfassten Umfeld erstellt wird, was insbesondere den technischen Vorteil bewirkt, dass die digitale Karte effizient erstellt werden kann, ohne dass zusätzliche externe Landmarken oder Vermessungsmittel, die beispielsweise am Gleisrand angebracht sind, zwingend erforderlich sind.

Insbesondere wird beispielsweise der technische Vorteil bewirkt, dass keine externen Vermessungen zwecks Erstellung der digitalen Karte durchgeführt werden müssen.

"Extern" ist hier insbesondere relativ zum Schienenfahrzeug zu sehen.

Dadurch, dass das Umfeld während des Abfahrens des Gleises mittels des Schienenfahrzeugs erfasst wird, wird beispielsweise der technische Vorteil bewirkt, dass das Umfeld effizient erfasst werden kann. Insbesondere wird dadurch der technische Vorteil bewirkt, dass genau das Umfeld im Rahmen des Erstellens der digitalen Karte erfasst wird, welches nachher auch im Rahmen einer Lokalisierung des Schienenfahrzeugs mittels der Umfelderfassungseinrichtung erfasst werden kann. Dadurch kann ein Abgleich effizient durchgeführt werden.

Nach einer Ausführungsform ist vorgesehen, dass die digitale Karte unter Verwendung eines SLAM-Verfahrens erstellt wird.

Dadurch wird insbesondere der technische Vorteil bewirkt, dass die digitale Karte effizient erstellt werden kann.

Die Abkürzung "SLAM" steht für "Simultaneous Localization and Mapping", was ins Deutsche mit "simultane Lokalisierung und Kartenerstellung" übersetzt werden kann.

SLAM-Verfahren sind als solche bereits in der Robotik bekannt. Basierend auf solchen Verfahren erstellt beispielsweise ein mobiler Roboter gleichzeitig eine Karte seiner Umgebung und schätzt innerhalb dieser Karte seine Pose.

SLAM-Verfahren umfassen zum Beispiel ein oder mehrere der folgenden Verfahren: EKF SLAM ("Extended Kalman Filter"), beispielsweise SEIF (Space Extended Information Filter), UKF (Uncented Kalman Filter), SLAM mit Partikelfiltern, beispielsweise Fast SLAM, Grid-basierte Verfahren mit Rao-Blackwellisierten Partikelfiltern, DP-SLAM, "Expectation-Maxilation-Filter", Graph-basierende Techniken, beispielsweise Graph SLAM, TORO, HOG-Man, Tree Map, Relaxationstechniken, Smoothing-Techniken.

Ein SLMA-Verfahren ist also beispielsweise ein Grid-basiertes Verfahren, insbesondere ein Grid-basiertes Partikelfilterverfahren.

SLAM-Verfahren weisen üblicherweise den Nachteil auf, dass sie hohe Datenmengen produzieren, was beispielsweise im Automotivebereich oder in der Robotik ein Problem darstellt. Es wurde aber überraschenderweise herausgefunden, dass im Schienenfahrzeugbereich im Vergleich zum Automotivebereich oder zur Robotik nur ein Bruchteil der Datenmengen anfällt. Dies ist insbesondere darauf zurückzuführen, dass ein Schienennetz ein weitestgehend abgeschlossener Raum darstellt und eine deutlich weniger hohe Komplexität aufweist als ein Straßennetz. Daher können in vorteilhafter Weise SLMA-Verfahren im Vergleich zum Automotivebereich oder zur Robotik bei Schienenfahrzeugen effizient eingesetzt werden.

SLAM-Verfahren basieren insbesondere darauf, dass die digitale Karte inkrementell erstellt oder aufgebaut wird.

Das heißt also, dass gemäß einer Ausführungsform die digitale Karte inkrementell aufgebaut wird.

Das heißt also insbesondere, dass beispielsweise zunächst keine digitale Karte vorhanden ist, die digitale Karte wird also beispielsweise neu erstellt.

Beispielsweise ist vorgesehen, dass eine momentane Position des Schienenfahrzeugs den Ursprung eines Koordinatensystems in der digitalen Karte definiert. Somit ist also beispielsweise vorgesehen, dass eine erste Umfelderfassung von der momentanen Position durchgeführt wird, so dass beispielsweise das erfasste Umfeld mit der momentanen Position in die digitale Karte integriert wird.

Nach dieser ersten Umfelderfassung ist beispielsweise vorgesehen, dass eine zweite Umfelderfassung von einer sich aufgrund des Befahrens des Gleises resultierenden neuen Position des Schienenfahrzeugs durchgeführt wird.

Die erste und die zweite Umfelderfassung werden sich teilweise überlappen, so dass ein Teil der aus der ersten Umfelderfassung bekannten Umgebung von der neuen Position wiedererkannt wird. Hierbei wird auch ein neuer, bisher unbekannter Bereich des Umfelds von der neuen Position erfasst.

Aus der Überlappung wird beispielsweise eine Bewegung des Schienenfahrzeugs berechnet, sodass seine absolute Position (neue Position) relativ zu dem Ursprung des Koordinatensystems bekannt ist, so dass das zweite erfasste Umfeld mit der neuen Position in die digitale Karte integriert werden kann respektive wird. Basierend auf dieser Vorgehensweise wird somit die digitale Karte inkrementell erweitert oder aufgebaut, bis ein bestimmtes Gebiet vermessen ist.

Erfindungsgemäß ist vorgesehen, dass bei einer Detektion eines benachbarten Gleises in dem erfassten Umfeld eine Position des benachbarten Gleises zum mittels des Schienenfahrzeugs abgefahrenen Gleis geschätzt wird, wobei die geschätzte Position des benachbarten Gleises in die digitale Karte aufgenommen wird.

Dadurch wird zum Beispiel der technische Vorteil bewirkt, dass das benachbarte Gleis selbst nicht mehr mittels des Schienenfahrzeugs befahren werden muss, um dieses mit in die digitale Karte zu integrieren. Dadurch wird insbesondere der technische Vorteil bewirkt, dass die digitale Karte effizient erstellt werden kann.

Gemäß einer Ausführungsform ist vorgesehen, dass das Erstellen der digitalen Karten ein Bereinigen des erfassten Umfelds von Störobjekten umfasst.

Dadurch wird insbesondere der technische Vorteil bewirkt, dass die erstellte digitale Karte frei von Störobjekten ist. Dadurch kann der Abgleich im Rahmen der Lokalisierung des Schienenfahrzeugs besonders effizient und genau durchgeführt werden.

Störobjekte sind beispielsweise Artefakte in der Umfelderfassung, also beispielsweise in der Umfeldsensordatenerfassung, Artefakte können zum Beispiel durch ungewollte Signalreflexionen entstehen oder Objekte, welche sich im Sensorbild befinden, aber nicht ortsfest sind respektive sich über die Zeit verändern, sein. Ein Beispiel für solche Objekte sind Fußgänger entlang des Fahrwegs, also des Gleises, oder auch eine Vegetation, die sich im Laufe der Jahreszeiten natürlich verändert oder manuell entfernt oder zurückgeschnitten wird. Die den Artefakten respektive Objekten entsprechenden Daten werden dann beispielsweise von Hand herausgefiltert respektive es werden Algorithmen verwendet, welche die Störobjekte erkennen und eliminieren, wobei im Rahmen der Verwendung solcher Algorithmen es beispielsweise vorgesehen, ist, dass ein bestimmtes Gleis, also ein bestimmtes Umfeld, mehrere Male abgefahren wird, um Unterschiede über die Zeit erkennen zu können.

Gemäß einer Ausführungsform ist vorgesehen, dass basierend auf dem erfassten Umfeld eine abgefahrene Trajektorie des Schienenfahrzeugs ermittelt wird, so dass basierend auf der ermittelten abgefahrenen Trajektorie ein Verlauf des Gleises ermittelt wird, wobei der Verlauf des Gleises in die digitale Karte aufgenommen wird.

Dadurch wird insbesondere der technische Vorteil bewirkt, dass die digitale Karte effizient erstellt werden kann. Insbesondere steht somit für die Lokalisierung des Schienenfahrzeugs eine digitale Karte zur Verfügung, die die Information umfasst, wie ein Verlauf eines Gleises ist. Dadurch kann dann das Schienenfahrzeug effizient lokalisiert werden.

Nach noch einer Ausführungsform ist vorgesehen, dass das Erfassen des Umfelds umfasst, dass das Umfeld jeweils in mehreren Ebenen erfasst wird.

Mehrere Ebene bezieht sich auf eine Erfassung der Umwelt in allen drei Dimensionen. Das heißt also insbesondere, dass das Umfeld dreidimensional erfasst wird.

Im Vergleich zur 2D-Erfassung steigen in vorteilhafter Weise die Genauigkeit und insbesondere die Robustheit der Umfelderfassung. Wenn im Vergleich beispielsweise ein Laser-Scanner nur die Daten einer Ebene erfasst, stehen viel weniger Information für die spätere Re-Lokalisierung zur Verfügung.

Weiterhin ist man nicht mehr von der exakten Umfeldsensorausrichtung abhängig, welche von zum Beispiel Schienenfahrzeugbewegungen und Untergrund abhängt.

Das heißt also insbesondere, dass durch die dreidimensionale Umfelderfassung in vorteilhafter Weise Schienenfahrzeugbewegungen und verschiedene Untergründe effizient kompensiert werden können.

Nach einer Ausführungsform ist vorgesehen, dass die Umfelderfassungseinrichtung einen oder mehrere Umfeldsensoren umfasst. Die Umfeldsensoren sind beispielsweise gleich oder unterschiedlich ausgebildet.

Ein Umfeldsensor im Sinne der Beschreibung ist beispielsweise einer der folgenden Umfeldsensoren: Radarsensor, Lidarsensor, Lasersensor, Videosensor, insbesondere Videosensor einer Videokamera, Magnetsensor, Ultraschallsensor und Infrarotsensor, Laserscanner.

Beispielsweise ist der Lidarsensor von einem Lidar-Scanner umfasst. Das heißt also beispielsweise, dass die Umfelderfassungseinrichtung einen Lidar-Scanner umfasst.

Beispielsweise umfasst die Umfelderfassungseinrichtung eine 3D-Videokamera.

Das heißt also insbesondere, dass gemäß einer Ausführungsform vorgesehen ist, dass die Umfelderfassungseinrichtung ausgebildet ist, das Umfeld dreidimensional zu erfassen, um ein erfasstes dreidimensionales Umfeld zu ermitteln.

Gemäß einer Ausführungsform ist vorgesehen, dass die Vorrichtung zum Erstellen einer digitalen Karte eingerichtet oder ausgebildet ist, das Verfahren zum Erstellen einer digitalen Karte aus- oder durchzuführen.

Nach einer Ausführungsform ist vorgesehen, dass das Verfahren zum Erstellen einer digitalen Karte mittels der Vorrichtung zum Erstellen einer digitalen Karte aus- oder durchgeführt wird.

Technische Funktionalitäten der Vorrichtung zum Erstellen einer digitalen Karte ergeben sich analog aus entsprechenden technischen Funktionalitäten des Verfahrens zum Erstellen einer digitalen Karte und umgekehrt.

Somit ergeben sich Vorrichtungsmerkmale analog aus entsprechenden Verfahrensmerkmalen und umgekehrt.

Nach einer Ausführungsform ist vorgesehen, dass der Prozessor ausgebildet ist, die digitale Karte unter Verwendung eines SLAM-Verfahrens zu erstellen.

Erfindungsgemäß ist vorgesehen, dass der Prozessor ausgebildet ist, bei einer Detektion eines benachbarten Gleises in dem erfassten Umfeld eine Position des benachbarten Gleises zum mittels des Schienenfahrzeugs abgefahrenen Gleis zu schätzen, wobei der Prozessor ausgebildet ist, die geschätzte Position des benachbarten Gleises in die digitale Karte aufzunehmen.

Ein Aufnehmen in die digitale Karte bezeichnet insbesondere ein Integrieren in die digitale Karte.

Nach einer Ausführungsform ist vorgesehen, dass der Prozessor ausgebildet ist, das erfasste Umfeld von Störobjekten zu bereinigen.

Nach einer Ausführungsform ist vorgesehen, dass der Prozessor ausgebildet ist, eine abgefahrene Trajektorie des Schienenfahrzeugs basierend auf dem erfassten Umfeld zu ermitteln, wobei der Prozessor ausgebildet ist, basierend auf der ermittelten abgefahrenen Trajektorie einen Verlauf des Gleises zu ermitteln, wobei der Prozessor ausgebildet ist, den Verlauf des Gleises in die digitale Karte aufzunehmen.

Nach einer Ausführungsform ist vorgesehen, dass die Umfelderfassungseinrichtung ausgebildet ist, das Umfeld jeweils in mehreren Ebenen zu erfassen.

Nach einer Ausführungsform ist vorgesehen, dass ein charakteristisches Merkmal in dem erfassten Umfeld ermittelt wird, wobei das Abgleichen umfasst, dass das ermittelte charakteristische Merkmal mit der digitalen Karte abgeglichen wird.

Dadurch wird zum Beispiel der technische Vorteil bewirkt, dass der Abgleich effizient durchgeführt werden kann.

Ein charakteristisches Merkmal ist beispielsweise eines der folgenden charakteristischen Merkmale: Infrastrukturelement, beispielsweise Brücke, Gebäude, beispielsweise Bahnhof. Beispielsweise werden mehrere charakteristische Merkmale in dem erfassten Umfeld ermittelt, wobei das Abgleichen umfasst, dass die ermittelten charakteristischen Merkmale mit der digitalen Karte abgeglichen werden.

Das heißt also, dass im Rahmen des Abgleichs des ermittelten charakteristischen Merkmals mit der digitalen Karte nach dem ermittelten charakteristischen Merkmal in der digitalen Karte gesucht wird, wobei bei einer Übereinstimmung das Schienenfahrzeug beispielsweise in der digitalen Karte lokalisiert werden kann respektive wird.

Ein charakteristisches Merkmal ist insbesondere jedes Objekt, welches die Monotonie entlang des Gleises, also der Strecke, unterbricht. Auf einer Standard-Bahnstrecke hat man (insbesondere aus Sicht der Umfeldsensoren) sich viele wiederholende, gleichartige Elemente (zum Beispiel: Schiene, Schwellen, Oberleitungsmasten), so dass eine eindeutige Positionsbestimmung üblicherweise schwierig wird. Jedes Infrastrukturelement, welches einen Ort eindeutig kennzeichnet (Signal respektive Signalkombination, Bahnsteig, etc.) erhöht die Genauigkeit der Re-Lokalisierung in der digitalen Karte (insbesondere in Abhängigkeit zum Suchraum).

Nach einer Ausführungsform ist vorgesehen, dass der Prozessor ausgebildet ist, ein charakteristisches Merkmal in dem erfassten Umfeld zu ermitteln, wobei der Prozessor ausgebildet ist, das ermittelte charakteristische Merkmal mit der digitalen Karte abzugleichen.

Nach einer Ausführungsform ist vorgesehen, dass der Prozessor ausgebildet ist, basierend auf dem Abgleich eine erste Position des Schienenfahrzeugs zu ermitteln, wobei der Prozessor ausgebildet ist, die erste Position mit einem Verlauf eines oder mehrerer von der digitalen Karte umfassten Gleises oder Gleise abzugleichen, um das Schienenfahrzeug gleisselektiv zu lokalisieren.

Es ist vorgesehen, dass das Schienenfahrzeug eingerichtet oder ausgebildet ist, das Verfahren zum Erstellen einer digitalen Karte aus- oder durchzuführen.

Die Formulierung "respektive" umfasst insbesondere die Formulierung "und/oder".

Ein Schienenfahrzeug im Sinne der Beschreibung ist zum Beispiel motorisiert oder unmotorisiert.

Ein Schienenfahrzeug ist zum Beispiel eines der folgenden Schienenfahrzeuge: Lokomotive, Triebzug, Triebwagen, Waggon, Schienenfahrrad.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei
- FIG 1: ein Ablaufdiagramm eines Verfahrens zum Erstellen einer digitalen Karte,
- FIG 2: eine Vorrichtung zum Erstellen einer digitalen Karte,
- FIG 3: ein Ablaufdiagramm eines Verfahrens zum Lokalisieren eines Schienenfahrzeugs,
- FIG 4: eine Vorrichtung zum Lokalisieren eines Schienenfahrzeugs und
- FIG 5: ein Schienenfahrzeug
zeigen.

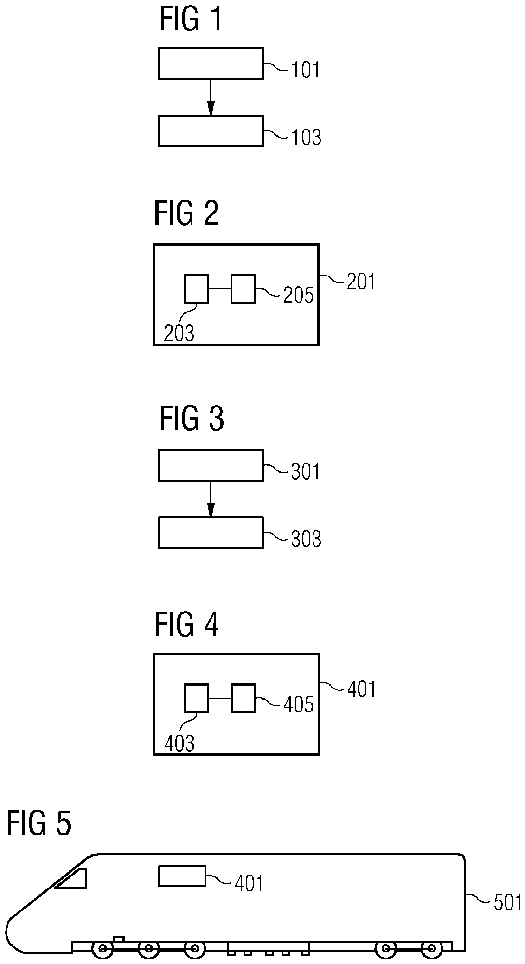

FIG 1 zeigt ein Ablaufdiagramm eines Verfahrens zum Erstellen einer digitalen Karte unter Verwendung eines eine Umfelderfassungseinrichtung aufweisenden Schienenfahrzeugs.

Gemäß einem Schritt 101 ist vorgesehen, dass während eines Abfahrens eines Gleises mittels des Schienenfahrzeugs ein Umfeld des Schienenfahrzeugs mittels der Umfelderfassungseinrichtung erfasst wird. Gemäß einem Schritt 103 ist vorgesehen, dass eine digitale Karte des Umfelds basierend auf dem erfassten Umfeld erstellt wird.

Die digitale Karte wird beispielsweise basierend auf einem SLAM-Verfahren erstellt. Das heißt also, dass für das Erstellen insbesondere ein SLAM-Verfahren verwendet wird.

FIG 2 zeigt eine Vorrichtung 201 zum Erstellen einer digitalen Karte.

Die Vorrichtung 201 umfasst eine Umfelderfassungseinrichtung 203, die ausgebildet ist, während eines Abfahrens eines Gleises mittels eines Schienenfahrzeugs ein Umfeld des Schienenfahrzeugs zu erfassen.

Die Vorrichtung 201 umfasst einen Prozessor 205, der ausgebildet ist, eine digitale Karte des Umfelds basierend auf dem erfassten Umfeld zu erstellen.

FIG 3 zeigt ein Ablaufdiagramm eines Verfahrens zum Lokalisieren eines eine Umfelderfassungseinrichtung aufweisenden Schienenfahrzeugs.

Gemäß einem Schritt 301 ist vorgesehen, dass ein Umfeld des Schienenfahrzeugs mittels der Umfelderfassung erfasst wird. Das Umfeld wird beispielsweise während eines Abfahrens eines Gleises durch das Schienenfahrzeug erfasst.

Gemäß einem Schritt 303 ist vorgesehen, dass das erfasste Umfeld mit einer digitalen Karte abgeglichen wird, um das Schienenfahrzeug zu lokalisieren.

Nach einer Ausführungsform ist vorgesehen, dass das Schienenfahrzeug basierend auf dem Abgleich in der digitalen Karte lokalisiert wird.

FIG 4 zeigt eine Vorrichtung 401 zum Lokalisieren eines Schienenfahrzeugs.

Die Vorrichtung 401 umfasst eine Umfelderfassungseinrichtung 403, die ausgebildet ist, ein Umfeld des Schienenfahrzeugs zu erfassen. Die Umfelderfassungseinrichtung 403 ist insbesondere ausgebildet, ein Umfeld des Schienenfahrzeugs während eines Befahrens eines Gleises durch das Schienenfahrzeug zu erfassen.

Die Vorrichtung 401 umfasst einen Prozessor 405, der ausgebildet ist, das erfasste Umfeld mit einer digitalen Karte abzugleichen, um das Schienenfahrzeug zu lokalisieren.

Nach einer Ausführungsform handelt es sich bei der Umfelderfassungseinrichtung 403 der Vorrichtung 401 um die Umfelderfassungseinrichtung 203 der Vorrichtung 201.

Nach einer Ausführungsform handelt es sich bei dem Prozessor 405 der Vorrichtung 401 um den Prozessor 205 der Vorrichtung 201.

Das heißt also beispielsweise, dass die Vorrichtung zum Lokalisieren eines Schienenfahrzeugs auch als Vorrichtung zum Erstellen einer digitalen Karte verwendet werden kann und umgekehrt. Das heißt also beispielsweise, dass der Prozessor ausgebildet ist, eine digitale Karte des Umfelds basierend auf dem erfassten Umfeld zu erstellen, wobei der Prozessor gleichzeitig ausgebildet ist, das erfasste Umfeld mit einer digitalen Karte abzugleichen, um das Schienenfahrzeug zu lokalisieren.

FIG 5 zeigt ein Schienenfahrzeug 501.

Das Schienenfahrzeug 501 umfasst die Vorrichtung 401 der FIG 4. Der Übersicht halber sind die Umfelderfassungseinrichtung 403 und der Prozessor 405 nicht gezeigt.

In einer anderen Ausführungsform umfasst das Schienenfahrzeug 501 zusätzlich oder anstelle zur Vorrichtung 401 die Vorrichtung 201 der FIG 2.

Das Grundprinzip eines SLAM-Verfahrens basiert insbesondere auf einer inkrementellen Erstellung der digitalen Karte, während das Schienenfahrzeug ein Gleis befährt.

Nach einer Ausführungsform umfasst das Erstellen der digitalen Karte ein Aktualisieren einer bereits bereitgestellten digitalen Karte.

Mittels der Umfelderfassungseinrichtung, die beispielsweise optische Sensoren umfasst, wobei die optischen Sensoren beispielsweise Tiefeninformationen des Umfelds aufnehmen können, ist es in vorteilhafter Weise ermöglicht, basierend auf dem SLAM-Verfahren eine hoch genaue, insbesondere Zentimetergenaue, Position des Schienenfahrzeugs zu ermitteln. Somit ist in vorteilhafter Weise eine gleisselektive Lokalisierung des Schienenfahrzeugs ermöglicht. Das heißt also beispielsweise, dass es basierend auf dem erfindungsgemäßen Konzept ermöglicht ist, ein Schienenfahrzeug einem bestimmten Gleis von mehreren Gleisen zuzuordnen.

Das Erstellen der digitalen Karte umfasst beispielsweise, dass ein oder mehrere Gleise abgefahren werden, wobei während des Abfahrens oder Befahrens des Gleises ein Umfeld des Schienenfahrzeugs erfasst wird. Somit stehen zum Beispiel 3D-Informationen des Umfelds zur Verfügung. 3D-Informationen des Umfelds werden beispielsweise mittels eines Lidar-Scanners ermittelt. Ein Lidar-Scanner erfasst beispielsweise in verschiedenen Ebenen das Umfeld des Schienenfahrzeugs.

Die Formulierungen "Ein Befahren eines Gleises" und "ein Abfahren eines Gleises" können im Sinne der Beschreibung synonym verwendet werden.

Es ist insbesondere nicht notwendig, jedes Gleis mittels des Schienenfahrzeugs zu befahren, um die digitale Karte zu erstellen. Auf einer Strecke, die mehrere Gleise umfasst, kann beispielsweise ein Befahren eines der Gleise mit entsprechender Umfelderfassung ausreichen, um die Position der benachbarten Gleise, die beispielsweise parallel zu dem Gleis verlaufen, zu schätzen und in die digitale Karte mitaufzunehmen oder zu integrieren.

Basierend auf der Umfelderfassung ist beispielsweise vorgesehen, dass eine Trackinformation gebildet wird. Das Bilden einer Trackinformation bedeutet insbesondere, dass eine abgefahrene Trajektorie des Schienenfahrzeugs ermittelt wird. Basierend auf der abgefahrenen Trajektorie, also basierend auf der Trackinformation, wird beispielsweise ein Verlauf des abgefahrenen Gleises ermittelt, sodass der Verlauf des Gleises in die digitale Karte integriert oder aufgenommen wird respektive werden kann.

Beispielsweise ist eine automatische und/oder manuelle Bereinigung des erfassten Umfelds respektive der digitalen Karte von Störobjekten vorgesehen. Das heißt also, dass Störobjekte in der digitalen Karte respektive in dem erfassten Umfeld entfernt werden. Das Entfernen wird beispielsweise automatisch durchgeführt. Das Entfernen kann zusätzlich oder anstelle zum automatischen Entfernen manuell durchgeführt werden.

Das Lokalisieren des Schienenfahrzeugs basiert auf einer Umfelderfassung mittels der Umfelderfassungseinrichtung, wobei die aktuelle Szenerie (das momentan erfasste Umfeld) mit den hinterlegten Kartendaten (die im Rahmen des Verfahrens zum Erstellen einer digitalen Karte erstellte digitale Karte) abgeglichen wird. Das Abgleichen wird insbesondere basierend auf einem Abgleich von charakteristischen Merkmalen in dem momentan erfassten Umfeld und in der digitalen Karte durchgeführt.

Beispielsweise ist ein Abgleich der Position des Schienenfahrzeugs mit einem möglichen Gleisverlauf vorgesehen. Das heißt also, dass zunächst eine erste Position des Schienenfahrzeugs basierend auf dem Abgleich ermittelt wird, wobei die erste Position mit einem Verlauf eines oder mehrerer in der digitalen Karte verzeichneten Gleise abgeglichen wird, um das Schienenfahrzeug gleisselektiv zu lokalisieren, wobei das Schienenfahrzeug beispielsweise gleisselektiv basierend auf diesem Abgleich lokalisiert wird.

Die Erfindung weist also insbesondere den Vorteil auf, dass eine gleisselektive Lokalisierung eines Schienenfahrzeugs ermöglicht ist. Insbesondere weist die Erfindung den Vorteil auf, dass eine hoch genaue digitale Karte erstellt werden kann, basierend auf welchen Schienenfahrzeugen effizient lokalisiert werden können.

Das erfindungsgemäße Konzept ermöglicht es dass nicht notwendigerweise alle Gleise für das Erstellen der digitalen Karte befahren oder abgefahren werden müssen.

## Patentansprüche

1. Verfahren zum Erstellen einer digitalen Karte unter Verwendung eines eine Umfelderfassungseinrichtung (203) aufweisenden Schienenfahrzeugs (501), wobei während eines Abfahrens eines Gleises mittels des Schienenfahrzeugs (501) ein Umfeld des Schienenfahrzeugs (501) mittels der Umfelderfassungseinrichtung (203) erfasst (101) wird, wobei eine digitale Karte des Umfelds basierend auf dem erfassten Umfeld erstellt (103) wird, wobei bei einer Detektion eines benachbarten Gleises in dem erfassten Umfeld eine Position des benachbarten Gleises zum mittels des Schienenfahrzeugs (501) abgefahrenen Gleis geschätzt wird, wobei die geschätzte Position des benachbarten Gleises in die digitale Karte aufgenommen wird.

2. Verfahren nach Anspruch 1, wobei die digitale Karte unter Verwendung eines SLAM-Verfahrens erstellt wird.

3. Verfahren nach einem der vorherigen Ansprüche, wobei das Erstellen (103) der digitalen Karten ein Bereinigen des erfassten Umfelds von Störobjekten umfasst.

4. Verfahren nach einem der vorherigen Ansprüche, wobei basierend auf dem erfassten Umfeld eine abgefahrene Trajektorie des Schienenfahrzeugs (501) ermittelt wird, so dass basierend auf der ermittelten abgefahrenen Trajektorie ein Verlauf des Gleises ermittelt wird, wobei der Verlauf des Gleises in die digitale Karte aufgenommen wird.

5. Verfahren nach einem der vorherigen Ansprüche, wobei das Erfassen (101) des Umfelds umfasst, dass das Umfeld jeweils in mehreren Ebenen erfasst wird.

6. Vorrichtung (201) zum Erstellen einer digitalen Karte, umfassend eine Umfelderfassungseinrichtung (203), die ausgebildet ist, während eines Abfahrens eines Gleises mittels eines Schienenfahrzeugs (501) ein Umfeld des Schienenfahrzeugs (501) zu erfassen, und einen Prozessor (205), der ausgebildet ist, eine digitale Karte des Umfelds basierend auf dem erfassten Umfeld zu erstellen, wobei der Prozessor (205) ausgebildet ist, bei einer Detektion eines benachbarten Gleises in dem erfassten Umfeld eine Position des benachbarten Gleises zum mittels des Schienenfahrzeugs (501) abgefahrenen Gleis zu schätzen, wobei der Prozessor (205) ausgebildet ist, die geschätzte Position des benachbarten Gleises in die digitale Karte aufzunehmen.

7. Schienenfahrzeug (501), umfassend die Vorrichtung (201) nach Anspruch 6.

8. Computerprogramm, umfassend einen Programmcode zur Durchführung des Verfahrens nach einem der Ansprüche 1 bis 5, wenn das Computerprogramm auf einem Computer ausgeführt wird.

## Claims

1. Method for creating a digital map using a rail vehicle (501) having an environment detection device (203), wherein an environment of the rail vehicle (501) is detected (101) by means of the environment detection device (203) while a track is being traversed by the rail vehicle (501), wherein a digital map of the environment is created (103) based on the detected environment, wherein when an adjacent track is detected in the detected environment a position of the adjacent track relative to the track being traversed by the rail vehicle (501) is estimated, wherein the estimated position of the adjacent track is recorded in the digital map.

2. Method according to claim 1, wherein the digital map is created using a SLAM method.

3. Method according to one of the preceding claims, wherein the creation (103) of the digital maps comprises purging the detected environment of interference objects.

4. Method according to one of the preceding claims, wherein a trajectory traversed by the rail vehicle (501) is determined based on the detected environment, such that a course of the track is determined based on the determined traversed trajectory, wherein the course of the track is recorded in the digital map.

5. Method according to one of the preceding claims, wherein the detection (101) of the environment comprises detecting the environment in several planes in each case.

6. Device (201) for creating a digital map, comprising an environment detection device (203) which is designed to detect an environment of the rail vehicle (501) while a track is being traversed by a rail vehicle (501), and a processor (205) which is designed to create a digital map of the environment based on the detected environment, wherein the processor (205) is designed, when an adjacent track is detected in the detected environment, to estimate a position of the adjacent track relative to the track being traversed by the rail vehicle (501), wherein the processor (205) is designed to record the estimated position of the adjacent track in the digital map.

7. Rail vehicle (501), comprising the device (201) according to claim 6.

8. Computer program, comprising a program code for implementing the method according to one of claims 1 to 5, if the computer program is executed on a computer.

## Revendications

1. Procédé d'établissement d'une carte numérique en utilisant un véhicule (501) ferroviaire ayant un dispositif (203) de relevé du champ ambiant, dans lequel, pendant un parcours d'une voie au moyen du véhicule (501) ferroviaire, on relève un champ ambiant du véhicule (501) ferroviaire au moyen du dispositif (203) de relevé de champ ambiant, dans lequel on établit (103) une carte numérique du champ ambiant sur la base du champ ambiant relevé, dans lequel, lors d'une détection d'une voie voisine dans le champ ambiant relevé, on estime une position de la voie voisine par rapport à la voie parcourue au moyen du véhicule (501) ferroviaire, dans lequel on enregistre la position estimée de la voie voisine dans la carte numérique.

2. Procédé suivant la revendication 1, dans lequel on établit la carte numérique en utilisant un procédé SLAM.

3. Procédé suivant l'une des revendications précédentes, dans lequel l'établissement (103) des cartes numériques comprend un apurement du champ ambiant détecté d'objets perturbants.

4. Procédé suivant l'une des revendications précédentes, dans lequel, sur la base du champ ambiant relevé, on détermine une trajectoire parcourue du véhicule (501) ferroviaire, de manière à déterminer, sur la base de la trajectoire parcourue qui a été déterminée, un tracé de la voie, le tracé de la voie étant enregistré dans la carte numérique.

5. Procédé suivant l'une des revendications précédentes, dans lequel le relevé (101) du champ ambiant comprend que le champ ambiant soit relevé dans plusieurs plans.

6. Système (201) d'établissement d'une carte numérique, comprenant un dispositif (203) de relevé du champ ambiant, constitué pour relever, pendant qu'un véhicule (501) ferroviaire parcourt une voie, un champ ambiant du véhicule (501) ferroviaire et un processeur (205) constitué pour établir une carte numérique du champ ambiant sur la base du champ ambiant relevé, le processeur (205) étant constitué pour, lors d'une détection d'une voie voisine dans le champ ambiant relevé, estimer une position de la voie voisine par rapport à la voie parcourue au moyen du véhicule (501) ferroviaire, le processeur (205) étant constitué pour enregistrer la position estimée de la voie voisine dans la carte numérique.

7. Véhicule (501) ferroviaire, comprenant le système (201) suivant la revendication 6.

8. Programme d'ordinateur, comprenant un code de programme pour effectuer le procédé suivant l'une des revendication 1 à 5, lorsque le programme d'ordinateur est réalisé sur un ordinateur.
